# EUROPÄISCHE PATENTSCHRIFT

(11) **EP 2 311 759 B1**
(45) Veröffentlichungstag und Bekanntmachung des Hinweises auf die Patenterteilung: **10.12.2014**
(21) Anmeldenummer: 10186709.1
(22) Anmeldetag: 06.10.2010
(51) Int. Cl.: B65G 47/82

(54) **Transportsystem für Stückgüter und Verfahren zum Entladen von Stückgütern**
Transport system for articles and method for unloading articles
Système de transport pour marchandises et procédé de déchargement de marchandises

(30) Priorität: 13.10.2009 DE 102009049174
(43) Veröffentlichungstag der Anmeldung: 20.04.2011
(73) Patentinhaber: KUKA Roboter GmbH, 86165 Augsburg (DE)
(72) Erfinder: Hoene, Albrecht, 93138, Lappersdorf (DE)
(74) Vertreter: Patentanwälte Funk & Böss GbR

(56) Entgegenhaltungen:
- EP-A1- 1 174 374
- DE-A1-102005 002 756
- US-B1- 6 220 422

## Beschreibung

Die Erfindung betrifft ein Transportsystem für Stückgüter, aufweisend eine Förderanlage mit wenigstens einem von der Förderanlage bewegten Stückgutträger und eine Entladeeinrichtung zum Entfernen der Stückgüter von dem wenigstens einen Stückgutträger an einer Entladestelle. Die Erfindung betrifft auch ein zugehöriges Verfahren zum Entladen von Stückgütern von einem Stückgutträger einer Förderanlage an einer Entladestelle und eine diesbezügliche Verwendung in Gepäck-Fördersystemen.

Die EP 1 388 510 A1 beschreibt ein Transportsystem für Stückgutbehälter, insbesondere für Gepäckbehälter auf einer im wesentlichen horizontalen Förderbahn mit mindestens zwei voneinander beabstandeten Förderern, von denen mindestens ein Förderer angetrieben ist, sowie mit mindestens einer Einrichtung zum Entladen des Stückgutes unter Ausnutzung der Schwerkraft durch Kippen des Stückgutbehälters in eine Entladeposition quer zu seiner Transportrichtung. Eine Laufschienenschleife verläuft dort räumlich so, dass der Stückgutbehälter während seines Transportes durch die Einrichtung mittels des zwangsgeführten Koppelglieds einseitig von dem benachbarten Förderer abgehoben und in seine Kippstellung verschwenkt wird.

Die DE 20 2008 009 280 U1 beschreibt eine Fördervorrichtung mit einer Anzahl von entlang einer Führungseinrichtung bewegbaren Transporteinheiten. Die dort beschriebene Fördervorrichtung mit einer Anzahl von entlang einer Führungseinrichtung bewegbaren Transporteinheiten, weist an deren Oberseite zur schonenden Auf- und/oder Abgabe von Stückgutteilen jeweils eine entgegen einer Verfahrrichtung der Transporteinheiten antreibbare Abschiebeeinrichtung auf.

Die EP 1 174 374 A1 beschreibt eine Vorrichtung zur Handhabung von Gepäckstücken, mit einem Tragarm, der in wenigstens zwei Achsen frei beweglich ist und an einer Zentraleinheit angelenkt ist, welche am Ende einer Förderstrecke für Gegenstände positioniert ist, wobei die Bewegung des Tragarms vorgebbar gesteuert ist. Am freien Ende des Tragarms ist eine Ladevorrichtung angeordnet, welche eine Tragplattform zur Aufnahme von Gepäckstücken und je eine rückwärtige und eine seitliche Begrenzung aufweist, an welche sich der jeweils aufgenommene Gegenstand anlegt. Außerdem weist die Ladevorrichtung eine Entladevorrichtung auf, welche den aufgenommenen Gegenstand von der Tragplattform wieder entfernt.

Die DE 10 2005 002 756 A1 beschreibt ein Kontrollsystem für Gepäckstücke, mit einem Förderer, auf dem die Gepäckstücke in aus Kunststoff bestehenden wannenartigen Behältern liegend befördert werden, wobei die Behälter jeweils an einem metallischen Rahmen lösbar verriegelt sind, der durch den Förderer bewegt wird, ferner mit einem Durchleuchtungsgerät an einer separaten Förderbahn, die zumindest streckenweise neben dem Förderer angeordnet ist, einer Trennstation, an der die Behälter von den Rahmen gelöst und mit darin liegenden Gepäckstücken auf die separate Förderbahn stromaufwärts von dem Durchleuchtungsgerät umgesetzt werden, sowie einer Fügestation, in der die Behälter stromabwärts vom Durchleuchtungsgerät von der separaten Förderbahn abgehoben, über dem Förderer auf einen der Rahmen abgesetzt und mit diesem verbunden wird. Das in der DE 10 2005 002 756 A1 offenbarte Transportsystem entspricht dem Oberbegriff des Anspruchs 1.

Die US 6,220,422 B1 beschreibt ein Förderband für Gepäckstücke, das im Bereich einer Entladeabzweigung einen mechanischen Schieber aufweist, der an einen einzelnen Motor mechanisch gekoppelt ist und der mittels des Motors zwischen einer Verwahrungsposition und einer Umlenkpostion verstellbar ist. Aufgabe der Erfindung ist es, ein Transportsystem für Stückgüter bereitzustellen, bei dem die Stückgüter an ihrer Entladestelle von dem Stückgutträge in verbesserter Weise entfernt werden, insbesondere auf einer Förderanlage an einer Entladestelle ankommende Stückgüter unterschiedlichster Erscheinungsform möglichst rasch und sicher entfernen werden können.

Die Aufgabe der Erfindung wird gelöst durch ein Transportsystem für Stückgüter, aufweisend eine Förderanlage mit wenigstens einem von der Förderanlage bewegten Stückgutträger und eine Entladeeinrichtung zum Entfernen der Stückgüter von dem wenigstens einen Stückgutträger an einer Entladestelle, bei dem die Entladeeinrichtung von einem an der Entladestelle positionierten, frei programmierbaren Manipulator gebildet wird, mit dem frei programmierbaren Manipulator ein Abräumwerkzeug zum Entfernen der Stückgüter von ihren Stückgutträgern an der Entladestelle verbunden ist, und das Abräumwerkzeug zum Abschieben von dem frei programmierbaren Manipulator angesteuert ist.

Der frei programmierbare Manipulator ist dabei eingerichtet, das jeweils an der Entladestelle ankommende Stückgut durch Bewegen des Manipulators von dem Stückgutträger zu entfernen. Die Verwendung eines frei programmierbaren Manipulators führt dazu, dass einerseits keine Entladeeinrichtungen an den Stückgutträgern erforderlich sind bzw. mit diesen mitgeführt werden müssen und andererseits in Abhängigkeit des vom jeweiligen Stückgutträger herantransportierten Stückgutes, je nach Bedarf mit unterschiedlichen Bewegungsabläufen des Manipulators auf das Stückgut eingewirkt werden kann, um es vom Stückgutträger zu entfernen. Indem die aus dem Stand der Technik bekannten mehreren Stückgutträger-gebundenen Entladeeinrichtungen erfindungsgemäß durch einen einzigen Manipulator an der Entladestelle ersetzt werden, können - bis auf eine - so viele Entladeeinrichtungen eingespart werden, wie Stückgutträger im Transportsystem im Umlauf sind.

Beispielsweise an Flughäfen werden in Gepäckförderanlagen Transportbehälter eingesetzt, um das Fördergut, wie beispielsweise Fluggepäck, schonend und schnell zu transportieren, so dass mit den Passagiere mitreisendes Gepäck an Umsteigeflughäfen rasch umgeladen werden kann, und die Passagiere schneller ihre Anschlussflüge nutzen können. Auch wird ein einheitliches Förderverhalten und eine große Anlagenverfügbarkeit gefordert. Die Transportbehälter werden entweder von oben oder von der Seite beladen. Eine Beladung von oben hat den Nachteil, dass das Fördegut d.h. das Gepäck von oben in den Transportbehälter hineinfällt, wodurch die Transportbehälter mit der Zeit recht stark verschleißen. Eine Beladung von der Seite erfordert aktive Fördereinrichtungen, die bisher auf jedem einzelnen Transportbehälter vorzusehen waren. Dies sind beispielsweise Kippeinrichtungen oder Querförderbänder. Die Transportbehälter werden durch den hohen Aufwand an Fördereinrichtungen je Transportbehälter konstruktiv aufwändig und teuer. Die Entladung der Transportbehälter erfolgt dabei über diese aktiven Fördereinrichtungen, oder aber der gesamte Behälter muss gekippt werden. Oft müssen hierzu aufwändige Greifmechanismen, wie Klammern oder Permanentmagnete realisiert werden. Neben diesen Greifmechanismen und den Transportbehältern werden oft auch beträchtliche Teile der fördertechnischen Komponenten mitgekippt. Dies hat den Nachteil, dass schwere Bauteile bewegt werden oder Energie und/oder Daten auf bewegte Teile übertragen werden müssen. Dies hat auch deutlichen Verschleiß zur Folge. Bei vielen derartigen Systemen muss beim Kippen die Förderanlage angehalten werden, was eine Durchsatzbeschränkung der Förderlinien bedeutet. Bei problematischem Fördergut, wie z.B. nasser Lederkoffer, kann teilweise trotz Neigung des Transportbehälters die Haftreibung nicht überwunden werden, so dass das Fördergut d.h. der Koffer im Transportbehälter verbleibt und somit eine Störung verursacht.

Die Erfindung sieht eine roboterbasierte Lösung vor.

Anstelle aufwändiger Entleerungsmechanismen, räumt ein Roboter, dessen Bewegungsablauf mit der Bewegung des Behälters synchronisiert sein kann, den beladenen Stückgutträger, wie beispielsweise eine Schale, insbesondere für Koffer, ab. Der Roboter kann dabei als Werkzeug eine einfach gestaltete Schiebevorrichtung führen. Die Schiebevorrichtung kann als Räumbesen ausgebildet sein. Die horizontale Schieberichtung kann aus Sicht des bewegten Behälters senkrecht zur Behälterbewegung stehen. Die Form und die Größe der Schiebevorrichtung kann der Behälterform angepasst sein, womit sichergestellt werden kann, dass auch kleine Fördergüter sicher entladen werden.

Das erfindungsgemäße Transportsystem kann Vorteile dadurch bieten, dass das Transportsystem preisgünstig bereitgestellt werden kann, einfach nachrüstbar ist bzw. in einfacher Weise an veränderte Transport- und/oder Fördergutbedingungen angepasst werden kann. Ein Abwurf ist dabei an vielen bzw. verschiedenen Stellen der Fördertechnik, sowohl linksseitig als auch rechtsseitig möglich. Mit dem erfindungsgemäßen Transportsystem kann eine Erhöhung des Durchsatzes erreicht werden, da ggf. kein Anhalten der Stückgutträger notwendig ist. Eine Erhöhung des Durchsatzes bedeutet höhere Linienleistung und deswegen einen geringeren Platzbedarf der Gesamtanlage. Das Entladen kann mit höherer Sicherheit erfolgen. Die Abräumgeschwindigkeit und -beschleunigung kann individuell eingestellt werden. Beispielsweise kann das Transportsystem auf die Eigenschaften des Fördergutes, wie Gewicht, Größe, Empfindlichkeit oder die aktuelle Fördergeschwindigkeit abgestimmt werden. Außerdem kann die Rutschenbreite aufgrund der höheren Präzision des frei programmierbaren Manipulators reduziert werden, so dass ein geringerer Platzbedarf für das Transportsystem besteht. Durch das Abschieben mittels eines frei programmierbaren Manipulators wird das Fördergut schonender behandelt. Ergänzend ist auch eine roboterbasierte Beladung möglich. Analog der Behälterentladung kann auch eine Beladung durch den frei programmierbaren Manipulator erfolgen. Dazu kann das Abräumwerkzeug mechanisch angepasst sein. Mit dem frei programmierbaren Manipulator ist ein Abräumwerkzeug zum Entfernen der Stückgüter von ihren Stückgutträgern, insbesondere zum Abwerfen auf eine Abführeinrichtung an der Entladestelle verbunden. Das Abräumwerkzeug kann an die Größe, Form und Kontur der Stückgutträger angepasst sein. So kann bei einem zumindest annähernd ebenen und beispielsweise rechteckigen Stückgutträger das Abräumwerkzeug von einem ebenen Schieber gebildet werden, der sich über die Breite des Stückgutträgers erstreckt und zumindest im Wesentlichen senkrecht zum Boden des Stückgutträgers ausgerichtet ist. Ist der Stückgutträger andersartig geformt, kann das Abräumwerkzeug eine entsprechend angepasste Form aufweisen. Insbesondere kann das Abräumwerkzeug derart an den Stückgutträger angepasst sein, dass auch sehr kleine Stückgüter zuverlässig mit abgeräumt werden.

Das Abräumwerkzeug ist zum Abschieben, insbesondere in einer quer zur Förderrichtung der Förderanlage verlaufenden Richtung von dem frei programmierbaren Manipulator angesteuert. Das Abräumwerkzeug kann prinzipiell mittels jeglichen Bewegungsablaufs das Stückgut von dem Stückgutträger abräumen. In einer speziellen Ausführung kann das Abräumwerkzeug zum Abschieben des Stückgutes eingerichtet sein. Ein Abschieben kann beispielsweise dadurch erfolgen, das das Abräumwerkzeug einen Schieber aufweist, der oberhalb oder entlang der Oberfläche des Stückgutträgers von einer Seite des Stückgutträgers zur anderen Seite streicht und dabei das Stückgut mitnimmt d.h. vor sich herschiebt und von dem Stückgutträger drängt.

In allen Ausgestaltungen kann mit dem frei programmierbaren Manipulator ein Abräumwerkzeug verbunden sein, dessen Bewegung mit dem abzuräumenden durch die Förderanlage bewegten Stückgutträger synchronisiert ist. Dadurch kann das Stückgut auch dann entladen werden, wenn der jeweilige an der Entladestelle vorbeifahrende Stückgutträger in Bewegung ist. Dadurch kann ein Anhalten und Wiederanfahren der Stückgutträger entfallen, so dass das Transportsystem ununterbrochen in Bewegung und durchgehend verfügbar ist.

In einer Ausgestaltung kann das Abräumwerkzeug durch eine Bewegung der Achsen des frei programmierbaren Manipulators mit dem Stückgutträger synchronisiert sein. Im Falle eines stationär, also unbeweglich an der Entladestelle positionierten Manipulators kann das Abräumwerkzeug alleine durch Bewegen der Achsen des frei programmierbaren Manipulators auf die Bewegung des Stückgutträgers synchronisiert werden. Bei einer solchen Synchronisation führt das Abräumwerkzeug eine Bewegung nicht nur mit einer Richtungskomponente quer zur Bewegungsrichtung des Stückgutträgers aus, sondern auch mit einer Richtungskomponente in Bewegungsrichtung des Stückgutträgers und zwar insbesondere in gleicher Geschwindigkeit, wie der Stückgutträger.

In einer Ausgestaltung kann zusätzlich oder alternativ das Transportsystem eine Linearachse umfassen und das Abräumwerkzeug durch eine Bewegung der Linearachse, auf welcher der frei programmierbare Manipulator verfahrbar gelagert ist, mit dem Stückgutträger synchronisiert sein. So kann das Abräumwerkzeug mit dem Stückgutträgers durch eine Überlagerung von Bewegungen der Achsen des frei programmierbaren Manipulators und der Bewegung der Linearachse synchronisiert werden. In einer speziellen Ausgestaltung kann die Richtungskomponente quer zur Bewegungsrichtung des Stückgutträgers allein durch die Bewegungen der Achsen des frei programmierbaren Manipulators generiert werden und die Richtungskomponente in Bewegungsrichtung des Stückgutträgers allein durch die Bewegung der Linearachse generiert werden. Alternativ kann auch eine Mischbewegung aus den Achsen des frei programmierbaren Manipulators und der Linearachse erzeugt werden.

Ein erfindungsgemäßes Verfahren zum Entladen von Stückgütern von einem Stückgutträger einer Förderanlage an einer Entladestelle, insbesondere mit einem der beschriebenen Transportsysteme, sieht die in Anspruch 7 definierten Schritte vor.

In einer Weiterbildung des Verfahrens kann ein Abräumen des Stückgutes von einem sich in Bewegung befindlichen Stückgutträgers durch ein Abräumwerkzeug erfolgen, das von einem an der Entladestelle positionierten, frei programmierbaren Manipulator durch eine zur Bewegung des Stückgutträgers synchronisierten Bewegung des Manipulators geführt wird.

Die zur Bewegung des Stückgutträgers synchronisierte Bewegung des Abräumwerkzeugs kann durch Ansteuern der Achsen des Manipulators ausgeführt werden.

Alternativ oder Ergänzend kann die zur Bewegung des Stückgutträgers synchronisierte Bewegung des Abräumwerkzeugs durch Ansteuern der Bewegung einer Linearachse, auf welcher der Manipulator verfahrbar gelagert ist, ausgeführt werden.

Die zur Bewegung des Stückgutträgers synchronisierte Bewegung des Abräumwerkzeugs kann durch ein überlagertes Ansteuern der Achsen des Manipulators und Ansteuern der Bewegung der Linearachse ausgeführt werden.

In allen erfindungsgemäßen Varianten des Verfahrens kann die Bewegung des Manipulators mit unterschiedlichen Fahrbedingungen für die Bewegung des Abräumwerkzeugs in Abhängigkeit eines Merkmals des abzuräumenden Stückgutes ausgeführt werden, insbesondere auf Grundlage von Daten des Stückgutes, die von einem Mess- und/oder Identifikationssystem erfasst wurden. Dabei kann beispielsweise eine Erfassungseinrichtung in dem Transportsystem vorgesehen werden, das Daten der Stückgüter erfasst und ggf. übermittelt, so dass die Bewegung des Manipulators auf Grundlage der Daten angepasst werden kann. Die Erfassungseinrichtung bzw. das Mess- und/oder Identifikationssystem kann dabei am Manipulator vorgesehen bzw. an ihm befestigt sein. Beispielsweise können die Stückgüter dazu mit Transpondern oder RFID-Tags versehen sein.

So kann beispielsweise wenigstens eine Fahrbedingung aus der Gruppe von Bahnverlauf, Geschwindigkeit und Beschleunigung zum angepassten Bewegen des Abräumwerkzeugs in Abhängigkeit eines Merkmals des abzuräumenden Stückgutes geändert bzw. angepasst werden. Je nach dem, ob es sich beispielsweise um einen sehr festen Hartschalenkoffer handelt, oder um eine weiche Stofftasche, kann im beispielhaften Falle des Hartschalenkoffers das Abräumwerkzeug schneller geführt werden und der Hartschalenkoffer mit größerer Kraft von dem Stückgutträger entfernt werden oder im beispielhaften Falle der Stofftasche das Abräumwerkzeug langsamer geführt werden und die Stofftasche mit geringer Kraft von dem Stückgutträger entfernt werden. Dabei kann auch vorgesehen sein, die Geschwindigkeit des Stückgutträgers entsprechend des Merkmals des abzuräumenden Stückgutes zu reduzieren.

In allen erfindungsgemäßen Varianten des Verfahrens kann die Bewegung des Manipulators mit unterschiedlichen Fahrbedingungen für die Bewegung des Abräumwerkzeugs in Abhängigkeit eines Merkmals des abzuräumenden Stückgutträgers ausgeführt werden, insbesondere in Abhängigkeit der Form des Stückgutträgers. So kann bei der Entladebewegung beispielsweise die Form des Stückgutträgers berücksichtigt werden, um die Stückgüter schonend zu entladen. Z.B. kann der Roboter bzw. Manipulator eine bauchige Schalenform des Stückgutträgers berücksichtigen, wodurch die Entladesicherheit erhöht wird.

Die Bewegung des Manipulators mit unterschiedlichen Fahrbedingungen für die Bewegung des Abräumwerkzeugs kann in Abhängigkeit wenigstens eines Merkmals des abzuräumenden Stückgutes aus der Gruppe von Form, Abmaßen, Masse und Stoßempfindlichkeit des Stückgutes ausgeführt werden.

Die erfindungsgemäßen Verfahren können in Gepäck-Fördersystemen, insbesondere an Flughäfen zur Anwendung kommen. Die erfindungsgemäßen Transportsysteme können in Gepäck-Fördersystemen, insbesondere an Flughäfen verwendet werden.

Beispielhafte Ausführungsformen der Erfindung sind an Hand der Figuren 1 bis 3 beschrieben. Aus der detaillierten Beschreibung dieser konkreten Ausführungsbeispiele ergeben sich auch weitere generelle Merkmale und Vorteile der vorliegenden Erfindung.

Es zeigen:
- Figur 1: eine perspektivische Ansicht eines Transportsystems für Stückgüter, mit einer Förderanlage und einem Stückgutträger, sowie einem stationären Manipulator als Entladeeinrichtung;
- Figur 2: eine perspektivische Ansicht eines Transportsystems für Stückgüter, mit einer Förderanlage und einem Stückgutträger, sowie einem auf einer Linearachse verfahrbaren Manipulator als Entladeeinrichtung;
- Figur 3: eine schematische Darstellung der erfindungsgemäßen Verfahren zum Entladen von Stückgütern mit verschiedenen Ausführungen für die Bewegung des Manipulators.

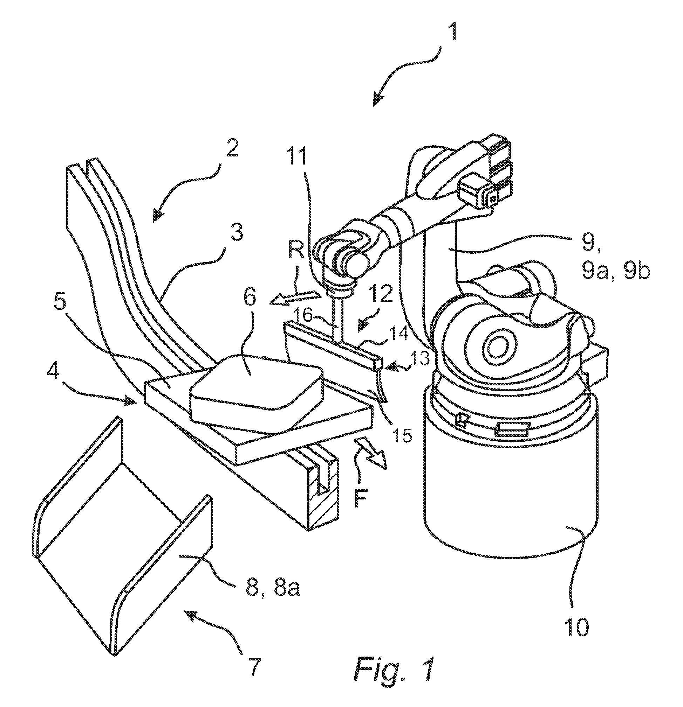

In der Fig. 1 ist eine Ausführungsform eines Transportsystems 1 an Hand eines kurzen Ausschnitts einer Förderanlage 2 dargestellt. Die Förderanlage 2 weist eine Förderstrecke 3 auf, entlang der beispielhaft ein einzelner von mehreren Stückgutträgern 4 verfahrbar gelagert ist. Der Stückgutträger 4 ist schematisch mit einem rechteckigen Tragboden 5 gezeigt. Der Stückgutträger 4 kann jedoch in Abhängigkeit des zu fördernden Stückgutes 6 unterschiedlich gestaltet sein. So kann der Stückgutträger 4 insbesondere auch eine runde bzw. kreisförmige Kontur aufweisen und/oder statt eines ebenen Tragbodens 5 einen schalenförmigen Boden aufweisen bzw. auch beispielsweise als Wanne, Gepäckschale oder Behälter gestaltet sein. Vorzugsweise ist der Stückgutträger 4 zwar entlang der Förderstrecke 3 verfahrbar, aber im übrigen starr gelagert d.h. nicht schwenk- oder kippbar ausgebildet. Die Fig. 1 zeigt den Abschnitt der Förderstrecke 3 im Bereich einer Entladestelle 7. Im Bereich der Entladestelle 7 ist eine Abführeinrichtung 8 in beispielhafter Ausführung einer Entladerutsche 8a dargestellt. An der Entladestelle 7 ist ein frei programmierbarer Manipulator 9a als Entladeeinrichtung 9 in Gestalt eines Industrieroboters 9b platziert.

In der in Fig. 1 gezeigten Ausführung als stationärer Manipulator 9a ist der Industrieroboter 9b beispielhaft auf einem Podest 10 örtlich fest positioniert. Der Manipulator 9a bzw. der Industrieroboter 9b kann jedoch auch unmittelbar auf einem Hallenboden befestigt sein. Der gezeigte Industrieroboter 9b ist als ein Knickarmroboter mit sechs Achsen ausgebildet, so dass ein Flansch 11 des Industrieroboters 9b in alle drei Raumrichtungen translatorisch und um alle drei Raumrichtungen rotatorisch bewegbar ist. An dem Flansch 11 ist ein Abräumwerkzeug 12 befestigt. Das Abräumwerkzeug 12 ist im dargestellten Ausführungsbeispiel ausgebildet, das Stückgut 6 in einer Richtung R quer zur Förderrichtung F der Förderstrecke 3 der Förderanlage 2 abzuräumen bzw. abzuschieben. Statt eines formschlüssig wirkenden Greifers räumt das Abräumwerkzeug 12 das Stückgut 6 durch eine Schiebebewegung von dem Stückgutträger 4 ab. Das Abräumwerkzeug 12 kann dazu, wie gezeigt, einen Schieber 13 aufweisen. Der Schieber 13 kann sich über die gesamte Breite des Stückgutträger 4 erstrecken. Der Schieber 13 kann eine Höhe aufweisen, die an die Höhe der zu fördernden Stückgüter 6 angepasst ist bzw. insbesondere dessen Höhe aufweisen kann. Der Schieber 13 kann starr, oder wie in Fig. 1 angedeutet flexibel ausgebildet sein. Durch eine flexibel Ausgestaltung des Schiebers 13 kann sich der Schieber 13 an den Boden des Stückgutträgers 4 und ggf. an die Gestalt der Stückgüter 6 elastisch anpassen oder anschmiegen. Es kann auch die Bewegung des Manipulators an die Form des Stückgutträgers angepasst werden. So kann beispielsweise bei einem schalenförmigen Stückgutträger der Manipulator eine bogenförmige bzw. geschwungene Bewegung ausführen, die sich an der Form des Stückgutträger orientiert. Eine Flexibilität des Schiebers 13 kann erreicht werden beispielsweise durch eine vorgespannte, schwenkbare Lagerung einer starren Platte an einem Halter 14 oder, wie in Fig. 1 angedeutet durch festes Einspannen einer elastischen Lippe 15 an dem Halter 14. Der Halter 14 kann unmittelbar oder wie dargestellt über ein Verbindungsglied 16 mit dem Flansch 11 des Manipulators 9a bzw. Industrieroboter 9b verbunden sein.

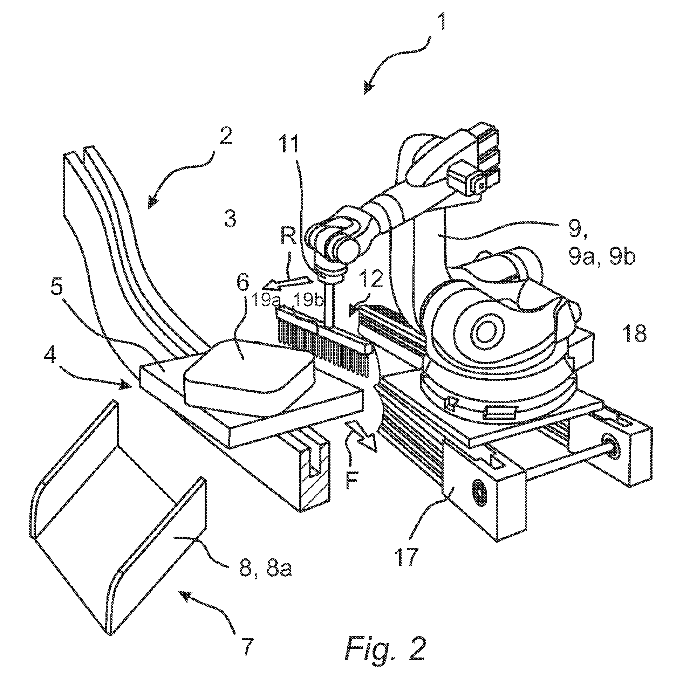

In der Ausführungsform gemäß Fig. 2 ist der Manipulator 9a bzw. der Industrieroboter 9b nicht stationär befestigt, sondern auf einer Linearachse 17 verfahrbar gelagert. Die Linearachse 17 liefert einen zusätzlichen Freiheitsgrad, um den Flansch mit dem daran befestigten Abräumwerkzeug 12 bewegen bzw. positionieren zu können. In einer besonderen Ausführungsform ist ein Wagen 18 der Linearachse 17 entlang einer geraden Bahn verfahrbar. Die Bahn kann insbesondere parallel zur Förderrichtung F der Förderstrecke 3 der Förderanlage 2 in einem Abschnitt im Bereich der Entladestelle 7 verlaufen. Mittels der Linearachse 17 kann der auf dem Wagen 18 befestigte Manipulator 9a bzw. Industrieroboter 9b insbesondere synchron mit der Bewegung des Stückgutträgers 4 bewegt werden.

In der Ausführungsform gemäß Fig. 2 kann ein Abräumwerkzeug 12 gemäß der Ausführung wie in Fig. 1 gezeigt und dazu beschrieben, verwendet werden. Alternativ kann beispielsweise wie in Fig. 2 dargestellt ein alternatives Abräumwerkzeug 12 verwendet werden. Das in Fig. 2 gezeigte Abräumwerkzeug 12 weist statt einer durchgehenden elastischen Lippe 15 eine Mehrzahl von in einem Abstand zueinander angeordneten Zinken 19a oder Borsten 19b auf. Die Zinken 19a können starr befestig oder federvorgespannt an dem Halter 14 gelagert sein. Die Borsten 19b können elastische Eigenschaften aufweisen und insbesondere aus inhärent elastischem Material hergestellt sein. Die Borsten 19b können dabei starr an dem Halter 14 befestigt oder beweglich, insbesondere federnd vorgespannt, an dem Halter 14 gelagert sein. Die Zinken 19a und/oder Borsten 19b können gleich oder unterschiedlich lang sein und insbesondere in ihren Längen an die Gestalt des Tragbodens 5 des Stückgutträgers 4 angepasst sein. Es kann auch die elastische Härte der Zinken 19a und/oder Borsten 19b an die Stückgüter 6 angepasst sein.

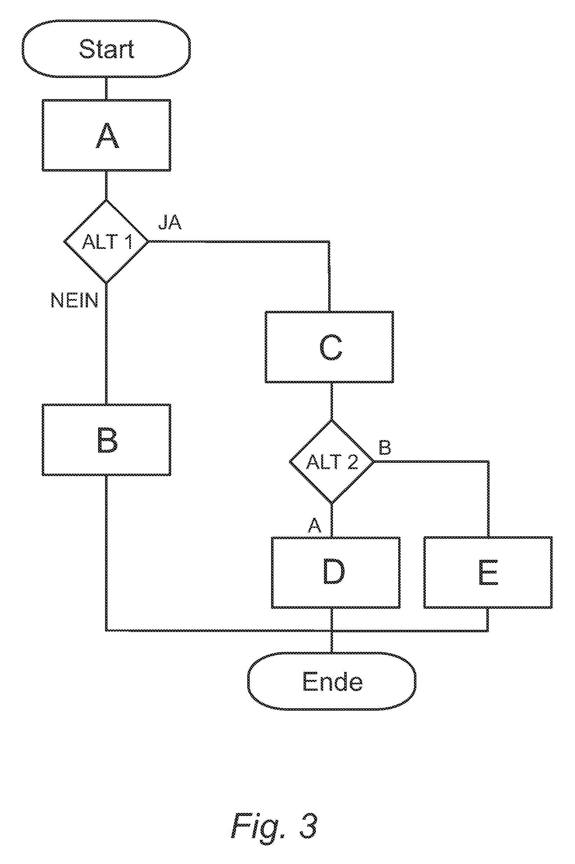

In Fig. 3 ist eine schematische Darstellung der erfindungsgemäßen Verfahren zum Entladen von Stückgütern mit verschiedenen Ausführungen für die Bewegung des Manipulators dargestellt.

Ein erfindungsgemäßes Verfahren zum Entladen von Stückgütern 6 von einem Stückgutträger 4 einer Förderanlage 2 beginnt mit einem Schritt A, bei dem auf wenigstens einem Stückgutträger 4 der Förderanlage 2 befindliches Stückgut 6 an die Entladestelle 7 herantransportiert wird.

Falls bei der ersten Alternative ALT1 der Stückgutträger 4 im Bereich der Entladestelle 7 zum Stillstand kommt (ALT1, NEIN) erfolgt gemäß Schritt B ein Abräumen des Stückgutes 6 von dem stehenden Stückgutträger 4 mittels eines Abräumwerkzeugs 12, das von dem an der Entladestelle 7 positionierten, frei programmierbaren Manipulator 9a geführt wird.

Falls bei der ersten Alternative ALT1 der Stückgutträger 4 im Bereich der Entladestelle 7 in Bewegung ist (ALT1, JA) erfolgt in Schritt C ein Abräumen des Stückgutes 6 durch das Abräumwerkzeug 12 mittels einer zur Bewegung des Stückgutträgers 4 synchronisierten Bewegung des Manipulators 9a und zwar entweder bei der Alternative ALT2A gemäß Schritt D durch Ansteuern der Achsen des Manipulators 9a oder bei der Alternative ALT2B gemäß Schritt E durch Ansteuern der Bewegung einer Linearachse 17, auf welcher der Manipulator 9a verfahrbar gelagert ist.

Ein Abräumen des Stückgutes 6 durch das Abräumwerkzeug 12 mittels einer zur Bewegung des Stückgutträgers 4 synchronisierten Bewegung des Manipulators 9a in Schritt C kann auch durch eine überlagerte Bewegung von Ansteuern der Achsen des Manipulators 9a gemäß Schritt D mit einem Ansteuern der Bewegung einer Linearachse 17, auf welcher der Manipulator 9a verfahrbar gelagert ist gemäß Schritt E erfolgen.

## Patentansprüche

1. Transportsystem für Stückgüter (6), aufweisend eine Förderanlage (2) mit wenigstens einem von der Förderanlage (2) bewegten Stückgutträger (4) und eine Entladeeinrichtung (9) zum Entfernen der Stückgüter (6) von dem wenigstens einen Stückgutträger (4) an einer Entladestelle (7), wobei die Entladeeinrichtung (9) von einem an der Entladestelle (7) positionierten, frei programmierbaren Manipulator (9a) gebildet wird und mit dem frei programmierbaren Manipulator (9a) ein Abräumwerkzeug (12) zum Entfernen der Stückgüter (6) von ihren Stückgutträgern (4)an der Entladestelle (7) verbunden ist, **dadurch gekennzeichnet, dass** das Abräumwerkzeug (12) zum Abschieben von dem frei programmierbaren Manipulator (9a) angesteuert ist.

2. Transportsystem nach Anspruch 1, **dadurch gekennzeichnet, dass** das Abräumwerkzeug (12) zum Abwerfen auf eine Abführeinrichtung (8, 8a) ausgebildet ist.

3. Transportsystem nach Anspruch 1, **dadurch gekennzeichnet, dass** das Abräumwerkzeug (12) zum Abschieben in einer quer zur Förderrichtung (F) der Förderanlage (2) verlaufenden Richtung (R) von dem frei programmierbaren Manipulator (9a) angesteuert ist.

4. Transportsystem nach einem der Ansprüche 1 bis 3, **dadurch gekennzeichnet, dass** mit dem frei programmierbaren Manipulator (9a) ein Abräumwerkzeug (12) verbunden ist, dessen Bewegung mit dem abzuräumenden durch die Förderanlage (2) bewegten Stückgutträger (4) synchronisiert ist.

5. Transportsystem nach Anspruch 4, **dadurch gekennzeichnet, dass** das Abräumwerkzeug (12) durch eine Bewegung der Achsen des frei programmierbaren Manipulators (9a) mit dem Stückgutträger (4) synchronisiert ist.

6. Transportsystem nach Anspruch 4 oder 5, **dadurch gekennzeichnet, dass** das Transportsystem (1) eine Linearachse (17) umfasst und das Abräumwerkzeug (12) durch eine Bewegung der Linearachse (17), auf welcher der frei programmierbare Manipulator (9a) verfahrbar gelagert ist, mit dem Stückgutträger (4) synchronisiert ist.

7. Verfahren zum Entladen von Stückgütern (6) von einem Stückgutträger (4) einer Förderanlage (2) an einer Entladestelle (7), insbesondere mit einem Transportsystem (1) nach einem der Ansprüche 1 bis 6, **gekennzeichnet durch** die Schritte:
- Herantransportieren (A) des auf wenigstens einem Stückgutträger (4) der Förderanlage (2) befindlichen Stückgutes (6) an die Entladestelle (7);
- Abräumen (B) des Stückgutes (6) von dem Stückgutträger (4) mittels eines Abräumwerkzeugs (12), das von dem an der Entladestelle (7) positionierten, frei programmierbaren Manipulator (9a) geführt und zum Abschieben des Stückgutes (6) von seinem Stückgutträger (4) angesteuert wird.

8. Verfahren nach Anspruch 7, **gekennzeichnet durch** den Schritt:
- Abräumen (C) des Stückgutes (6) von einem sich in Bewegung befindlichen Stückgutträgers (4) **durch** das Abräumwerkzeug (12), das von dem an der Entladestelle (7) positionierten, frei programmierbaren Manipulator (9a) **durch** eine zur Bewegung des Stückgutträgers (4) synchronisierten Bewegung des Manipulators (9a) geführt wird.

9. Verfahren nach Anspruch 8, **gekennzeichnet durch** den Schritt:
- Ausführen (D) der zur Bewegung des Stückgutträgers (4) synchronisierten Bewegung des Abräumwerkzeugs (12) **durch** Ansteuern der Achsen des Manipulators (9a).

10. Verfahren nach Anspruch 8 oder 9, **gekennzeichnet durch** den Schritt:
- Ausführen (E) der zur Bewegung des Stückgutträgers (4) synchronisierten Bewegung des Abräumwerkzeugs (12) **durch** Ansteuern der Bewegung einer Linearachse (17), auf welcher der Manipulator (9a) verfahrbar gelagert ist.

11. Verfahren nach einem der Ansprüche 7 bis 10, **gekennzeichnet durch** den Schritt:
- Ausführen der Bewegung des Manipulators (9a) mit unterschiedlichen Fahrbedingungen für die Bewegung des Abräumwerkzeugs (12) in Abhängigkeit eines Merkmals des abzuräumenden Stückgutes (6), insbesondere auf Grundlage von Daten des Stückgutes (6), die von einem Mess- und/oder Identifikationssystem erfasst wurden.

12. Verfahren nach Anspruch 11, **gekennzeichnet durch** den Schritt:
- Ändern wenigstens einer Fahrbedingung aus der Gruppe von Bahnverlauf, Geschwindigkeit und Beschleunigung zum angepassten Bewegen des Abräumwerkzeugs (12) in Abhängigkeit eines Merkmals des abzuräumenden Stückgutes (6).

13. Verfahren nach Anspruch 11 oder 12, **gekennzeichnet durch** den Schritt:
- Ausführen der Bewegung des Manipulators (9a) mit unterschiedlichen Fahrbedingungen für die Bewegung des Abräumwerkzeugs (12) in Abhängigkeit wenigstens eines Merkmals des abzuräumenden Stückgutes (6) aus der Gruppe von Form, Abmaßen, Masse und Stoßempfindlichkeit des Stückgutes (6).

14. Verfahren nach einem der Ansprüche 7 bis 13, **gekennzeichnet durch** den Schritt:
- Ausführen der Bewegung des Manipulators (9a) mit unterschiedlichen Fahrbedingungen für die Bewegung des Abräumwerkzeugs (12) in Abhängigkeit eines Merkmals des abzuräumenden Stückgutträgers (4), insbesondere in Abhängigkeit der Form des Stückgutträgers (4).

15. Verfahren nach einem der Ansprüche 7 bis 14 zur Anwendung in Gepäck-Fördersystemen, insbesondere an Flughäfen.

## Claims

1. Transport system for piece goods (6), comprising a conveyor system (2) with at least one piece goods carrier (4) moved by the conveyor system (2) and an unloading device (9) for removing the piece goods (6) from the at least one piece goods carrier (4) at an unloading point (7), wherein the unloading device (9) is a freely programmable manipulator (9a) positioned at the unloading point (7), and a clearing tool (12) for removing the piece goods (6) from their piece goods carriers (4) at the unloading point (7) is connected to the freely programmable manipulator (9a), **characterised in that** the clearing tool (12) is actuated by the freely programmable manipulator (9a) to perform the clearing by pushing.

2. Transport system according to claim 1, **characterised in that** the clearing tool (12) is designed for casting off onto an unloading device (8, 8a).

3. Transport system according to claim 1, **characterised in that** the clearing tool (12) is actuated by the freely programmable manipulator (9a) to perform the clearing in a direction (R) running transversely to the transport direction (F) of the conveyor system (2).

4. Transport system according to one of claims 1 to 3, **characterised in that** a clearing tool (12) whose movement is synchronized with the piece goods carriers (4) to be cleared moved by the conveyor system (2) is connected to the freely programmable manipulator (9a).

5. Transport system according to claim 4, **characterised in that** the clearing tool (12) is synchronised with the piece goods carrier (4) by a movement of the axes of the freely programmable manipulator (9a).

6. Transport system according to claim 4 or 5, **characterised in that** the transport system (1) comprises a linear axis (17) and the clearing tool (12) is synchronised with the piece goods carrier (4) by a movement of the linear axis (17) on which the freely programmable manipulator (9a) is movably supported.

7. Method for unloading piece goods (6) from a piece goods carrier (4) of a conveyor system (2) at an unloading point (7), in particular using a transport system (1) according to one of claims 1 to 6, **characterised by** the steps:
- transporting (A) the piece goods item (6) located on at least one piece goods carrier (4) of the conveyor system (2) to the unloading point (7);
- clearing (B) the piece goods item (6) from the piece goods carrier (4) by means of a clearing tool (12) that is guided by the freely programmable manipulator (9a) positioned at the unloading point (7) and is controlled for pushing the piece goods item (6) from its piece goods carrier (4).

8. Method according to claim 7, **characterised by** the step:
- clearing (C) the piece goods item (6) from a piece goods carrier (4) that is in motion by means of the clearing tool (12), which is guided by the freely programmable manipulator (9a) positioned at the unloading point (7), by means of a movement of the manipulator (9a) that is synchronised with the movement of the piece goods carrier (4).

9. Method according to claim 8, **characterised by** the step:
- executing (D) the movement of the clearing tool (12) synchronised with the movement of the piece goods carrier (4) by actuating the axes of the manipulator (9a).

10. Method according to claim 8 or 9, **characterised by** the step:
- executing (E) the movement of the clearing tool (12) synchronised with the movement of the piece goods carrier (4) by actuating the movement of a linear axis (17) on which the manipulator (9a) is movably supported.

11. Method according to one of claims 7 to 10, **characterised by** the step:
- executing the movement of the manipulator (9a) with different running conditions for the movement of the clearing tool (12) depending on a feature of the piece goods (6) to be cleared, in particular on the basis of data on the piece goods item (6) that have been acquired by a measuring and/or identification system.

12. Method according to claim 11, **characterised by** the step:
- changing at least one running condition from the group comprising: the programmed path, velocity and acceleration to the adjusted movement of the clearing tool (12) depending on a feature of the piece goods item (6) to be cleared.

13. Method according to claim 11 or 12, **characterised by** the step:
- executing the movement of the manipulator (9a) with different running conditions for the movement of the clearing tool (12), depending on at least one feature of the piece goods item (6) to be cleared from the group comprising, form, dimensions, mass and sensitivity to impact of the piece goods item (6).

14. Method according to one of claims 7 to 13, **characterised by** the step:
- executing the movement of the manipulator (9a) with different running conditions for the movement of the clearing tool (12), depending on a feature of the piece goods carrier (4) to be cleared, in particular depending on the form of the piece goods carrier (4).

15. Method according to one of claims 7 to 14 for use in luggage conveyor systems, in particular at airports.

## Revendications

1. Système de transport pour marchandises (6) présentant une installation de convoyage (2) comportant au moins un support de marchandises (4) déplacé par l'installation de convoyage (2) et un dispositif de déchargement (9) pour enlever les marchandises (6) dudit au moins un support de marchandises (4) à un poste de déchargement (7), le dispositif de déchargement (9) étant formé par un manipulateur (9a) librement programmable positionné au poste de déchargement (7) et un outil de dégagement (12) étant relié au manipulateur (9a) librement programmable pour enlever les marchandises (6) de leurs supports de marchandises (4) au poste de déchargement (7), **caractérisé en ce que** l'outil de dégagement (12) est piloté par le manipulateur (9a) librement programmable pour pousser la marchandise.

2. Système de transport selon la revendication 1, **caractérisé en ce que** l'outil de dégagement (12) est réalisé pour éjecter la marchandise sur un dispositif d'évacuation (8, 8a).

3. Système de transport selon la revendication 1, **caractérisé en ce que** l'outil de dégagement (12) est piloté par le manipulateur (9a) librement programmable pour pousser la marchandise dans une direction (R) s'étendant transversalement à la direction de convoyage (F) de l'installation de convoyage (2).

4. Système de transport selon l'une des revendications 1 à 3, **caractérisé en ce qu'**au manipulateur (9a) librement programmable est relié un outil de dégagement (12) dont le mouvement est synchronisé avec le support de marchandise (4) à dégager et déplacé par l'installation de convoyage (2).

5. Système de transport selon la revendication 4, **caractérisé en ce que** l'outil de dégagement (12) est synchronisé avec le support de marchandise (4) par un mouvement des axes du manipulateur (9a) librement programmable.

6. Système de transport selon la revendication 4 ou 5, **caractérisé en ce que** le système de transport (1) comprend un axe linéaire (17) et **en ce que** l'outil de dégagement (12) est synchronisé avec le support de marchandise (4) par un mouvement de l'axe linéaire (17) sur lequel le manipulateur (9a) librement programmable est monté de façon déplaçable.

7. Procédé de déchargement de marchandises (6) depuis un support de marchandise (4) d'une installation de convoyage (2) au niveau d'un poste de déchargement (7), en particulier à l'aide d'un système de transport (1) selon l'une des revendications 1 à 6, **caractérisé par** les étapes suivantes :
- transport (A) de la marchandise (6) se trouvant sur au moins un support de marchandise (4) de l'installation de convoyage (2) vers le poste de déchargement (7) ;
- dégagement (B) de la marchandise (6) hors du support de marchandise (4) au moyen d'un outil de dégagement (12) qui est guidé par le manipulateur (9a) librement programmable positionné sur le poste de déchargement (7) et piloté pour pousser la marchandise (6) hors du support de marchandise (4).

8. Procédé selon la revendication 7, **caractérisé par** l'étape suivante :
- dégagement (C) de la marchandise (6) d'un support de marchandise (4) se trouvant en mouvement au moyen de l'outil de dégagement (12) qui est guidé par le manipulateur (9a) librement programmable, positionné sur le poste de déchargement (7), par un mouvement du manipulateur (9a) qui est synchronisé par rapport au mouvement du support de marchandise (4).

9. Procédé selon la revendication 8, **caractérisé par** l'étape suivante :
- exécution (D) du mouvement de l'outil de dégagement (12) synchronisé par rapport au mouvement du support de marchandise (4) par pilotage des axes du manipulateur (9a).

10. Procédé selon la revendication 8 ou 9, **caractérisé par** l'étape suivante :
- exécution (E) du mouvement de l'outil de dégagement (12) synchronisé par rapport au mouvement du support de marchandise (4) par pilotage d'un axe linéaire (17) sur lequel le manipulateur (9a) est monté déplaçable.

11. Procédé selon l'une des revendications 7 à 10, **caractérisé par** l'étape suivante :
- exécution du mouvement du manipulateur (9a) dans différentes conditions de déplacement pour le mouvement de l'outil de dégagement (12) en fonction d'une caractéristique de la marchandise (6) à dégager, en particulier sur la base de données de la marchandise (6) qui ont été saisies par un système de mesure et/ou d'identification.

12. Procédé selon la revendication 11, **caractérisé par** l'étape suivante :
- modifier au moins une condition de déplacement parmi le groupe constitué par le parcours, la vitesse et l'accélération pour mouvoir de manière adaptée l'outil de dégagement (12) en fonction d'une caractéristique de la marchandise (6) à dégager.

13. Procédé selon la revendication 11 ou 12, **caractérisé par** l'étape suivante :
- effectuer le mouvement du manipulateur (9a) dans différentes conditions de déplacement pour le mouvement de l'outil de dégagement (12) en fonction d'au moins une caractéristique de la marchandise (6) à dégager parmi un groupe constitué par la forme, les dimensions, la masse et la sensibilité aux chocs de la marchandise (6).

14. Procédé selon l'une des revendications 7 à 13, **caractérisé par** l'étape suivante :
- effectuer le mouvement du manipulateur (9a) dans différentes conditions de déplacement pour le mouvement de l'outil de dégagement (12) en fonction d'une caractéristique du support de marchandise (4) à dégager, en particulier en fonction de la forme du support de marchandises (4).

15. Procédé selon l'une des revendications 7 à 14, destiné à être utilisé dans des systèmes de convoyage de bagages, en particulier dans des aéroports.
